Europäisches Patentamt

European Patent Office

Office européen des brevets

(11) Veröffentlichungsnummer: **0 142 088**
**B1**

(12) **EUROPÄISCHE PATENTSCHRIFT**

(45) Veröffentlichungstag der Patentschrift: **25.04.90**

(51) Int. Cl.⁵: **G 11 B 33/04, G 11 B 23/02**

(21) Anmeldenummer: **84112984.4**

(22) Anmeldetag: **27.10.84**

(54) Schwenkbehälter, insbesondere für Aufzeichnungsträger.

(30) Priorität: **10.11.83 DE 8332323 u**

(43) Veröffentlichungstag der Anmeldung:
**22.05.85 Patentblatt 85/21**

(45) Bekanntmachung des Hinweises auf die
Patenterteilung:
**25.04.90 Patentblatt 90/17**

(84) Benannte Vertragsstaaten:
**DE FR GB NL**

(56) Entgegenhaltungen:
**EP-A-0 086 275**
**DE-A-2 061 884**
**DE-A-3 129 559**
**FR-A-2 107 622**
**FR-A-2 517 454**
**GB-A-2 091 219**
**US-A-4 005 800**
**US-A-4 054 344**
**US-A-4 253 568**

(73) Patentinhaber: **BASF Aktiengesellschaft**
**Carl-Bosch-Strasse 38**
**D-6700 Ludwigshafen (DE)**

(72) Erfinder: **Willems, Martin**
**Gutleutstrasse 94**
**D-6000 Frankfurt (DE)**
Erfinder: **Feilen, Albert**
**Gartenstrasse 24**
**D-6000 Frankfurt (DE)**
Erfinder: **Urban, Otfried**
**Wilhelm-Kopp-Strasse 2**
**D-6200 Wiesbaden (DE)**

Courier Press, Leamington Spa, England.

## Beschreibung

Schwenkbehälter, im wesentlichen von Quaderform, für Gegenstände, insbesondere Aufzeichnungsträger, mit einem Bodenteil, der eine Rückwand, eine Bodenwand und in letzterer einen Ausschnitt aufweist, der auf zwei Seiten durch Bodenteilseitenwände begrenzt ist, und mit einem Deckelteil, der aus einer Deckelwand und einer daran vorgesehenen Tasche besteht, wobei die Vorderwand der Tasche im Umriß der Kontur des Ausschnitts entspricht und die Taschenseitenwände und der Taschenboden und die Taschenvorderwand mit der Deckelwand verbunden sind, und wobei zwischen Deckel- und Bodenteil Gelenkeinrichtungen und Schwenkbegrenzungseinrichtungen vorgesehen sind.

Mit der FR-A-1 430 704 ist für Kassetten ein zweiteiliger, aufklappbarer Behälter bekannt, bei dem der Deckelteil eine Aufnahmetasche für die Kassette und der Bodenteil eine der vorderseite der Tasche entsprechenden Ausschnitt aufweist, in den die Vorderseite der Tasche bei geschlossenem Behälter zu liegen kommt, so daß ein geschlossenes, quaderförmiges Gehäuse gebildet wird. Deckel- und Bodenteile sind dabei über zwei Zapfen-Loch-Gelenke miteinander verbunden. Die Gelenke sind primitiv und nicht belastbar, so daß viele Behälter durch Abbrechen der Gelenkzapfen wertlos werden. Die Boden- und Deckelteile sind einfach voneinander trennbar und damit nicht unverlierbar. Auch durch unachtsamen Gebrauch kann ein Trennen der Teile — auch mit dem Ergebnis, daß die Zapfen oder die Bodenteilseitenwände abbrechen, auftreten.

Eine Schwenkbegrenzung ist für diesen bekannten Behälter in der DE-B-23 66 195 beschrieben, worin durch Anbringen von Schwenkbegrenzungsvorsprüngen am Deckelteil im Falle einer 180°-Öffnung des Behälters die Vorsprünge gegen die Seitenwände des Bodenteils stoßen sollen. Aufgrund der Flexibilität der freien Seitenwandenden ist jedoch ein Überwinden der 180°-Begrenzungsvorsprünge ohne weiteres und auch unabsichtlich möglich, so daß ein Herausfallen der Kassette wirksam nicht verhinderbar ist.

Mit dem DE-U-78 34 754 ist auch ein Schwenkbehälter für mindestens zwei Aufzeichnungsträger, einen kartenförmigen in einem Kartenfach am Deckel und einer Tonbandkassette in einer separaten Wanne am Boden, bekannt. Dieser Behälter besitzt ein wesentlich größeres Volumen als der als "Snap Pack" bekannte Schwenkbehälter für eine Kassette, da der Bodenteil zumindest einen zusätzlichen Raum für die Tasche des Deckels aufweisen muß, aber auch noch weitere Räume zur Aufnahme von Bleistiften etc. aufweisen soll Die bekannte Verbindung von Bodenwanne und Deckel besteht darin aus Scharnierwangen mit Vertiefungen am Deckel, in die Achsstümpfe an den Außenseiten der Wannenseiten eingreifen. Eine Begrenzung des Öffnungswinkels tritt durch Anstoßen der rückwärtigen Oberkante des Deckels an der Vorderkante des Bodens bei ca. 130° ein. Weitere spezielle Schwenkbegrenzungseinrichtungen sind diesem bekannten Behälter nicht entnehmbar und auch nicht dadurch nahegelegt.

Es ist Aufgabe der vorliegenden Erfindung, eine wirksamere Schwenkbegrenzung für Schwenkbehälter der eingangs beschriebenen Art bereitzustellen.

Die Lösung dieser Aufgabe geht aus Anspruch 1 hervor.

Damit wird es einfach möglich, eine ohne Zerstörung des Behälters nicht überwindbare Schwenkbegrenzung auszubilden, wozu noch der Vorteil eines nur über die Länge des Schlitzes voreinstellbaren Begrenzungswinkels kommt.

In weiterer Ausgestaltung eines Behälters, z.B. eines als Snap Pack bekannten Kassettenbehälters, können in der Nähe der Taschenseitenwände in der Taschenvorderwand Schlitze, mit insbesondere geradem Verlauf, vorgesehen sein, in die die Bodenteil-Seitenwände beim Schwenkvorgang eingreifen.

Es ist montagemäßig günstig, wenn die Teile der Bodenteilseitenwände Gelenkzapfen und die Taschenseitenwände entsprechende Ausnehmungen aufweisen, wobei die Länge der Gelenkzapfen zusammen mit der Dicke der Teile der Bodenteil-Seitenwände kleiner dimensioniert ist als die Breite des Schlitzes.

In besonders zweckmäßiger Ausführung weist der Deckelteil in der Verlängerung die Taschenseitenwände Schließränder auf, und der Bodenteil weist eine gegenüber den Seitenwänden erhöhte Rückwand auf, so daß der Behälter in Schließstellung eine geschlossene Quaderform besitzt.

Dadurch wird eine dichte Behälterform erreichbar, und ein auf der Deckelwand liegender Gegenstand, insbesondere eine Kassette, erhält eine zusätzliche seitliche Abstützung und wird so vor einem seitlichen Herunterfallen vom Deckel, z.B. im Falle eines "Verkehrtherumöffnens" des Behälters, bewahrt.

Eine glatte, gefällige Form des geschlossenen Behälters wird vorteilhaft erreicht, wenn die Seitenwände des Bodenteils Ausnehmungen zur Aufnahme der Taschenseitenwände des Deckelteils besitzen.

Falls erforderlich, können am Deckelteil und/oder am Bodenteil Verriegelungselemente für die Schließstellung des Behälters vorgesehen sein. Einzelheiten der Erfindung sind in der Zeichnung dargestellten Ausführungsbeispielen, die nachfolgend beschrieben sind, entnehmbar.

Figur 1 zeigt einen Kassettenbehälter mit erfindungsgemäßer Schwenkbegrenzung in perspektivischer Darstellung

Figur 2 zeigt den Kassettenbehälter nach Figur 1 in geschlossenem Zustand

Figur 3 zeigt schematisch eine 180°-Begrenzungs-Endstellung

Figur 4 zeigt schematisch eine 90°-Begrenzungs-Endstellung

Figur 5 zeigt schematisch eine 65°- und eine 20°-Begrenzungs-Endstellung.

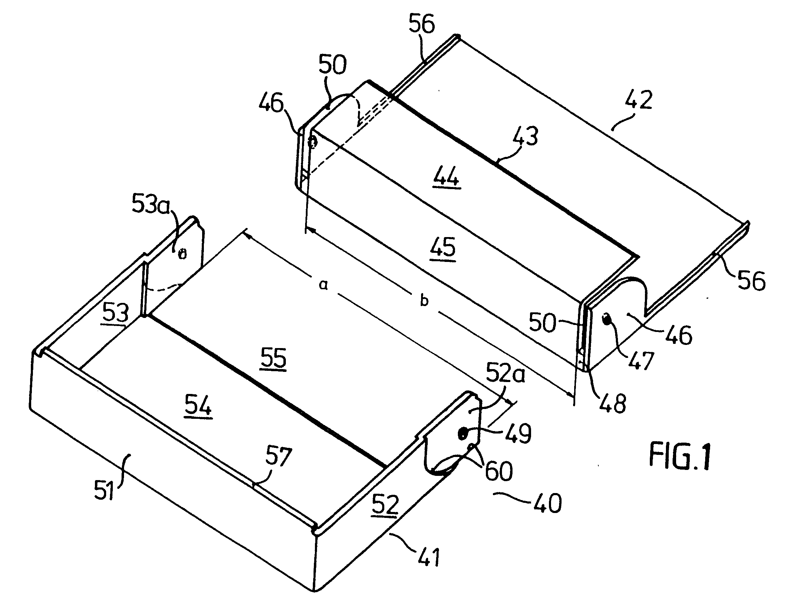

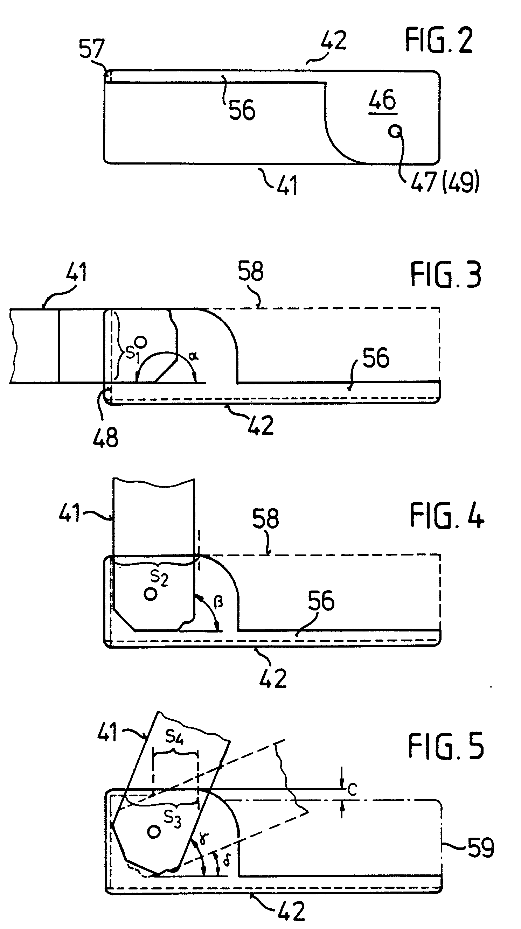

In Figuren 1 und 2 ist eine Klappbox 40, bestehend aus Bodenteil 41 und Deckelteil 42, hier voneinander getrennt, dargestellt. Die Tasche 43 am Deckelteil 42 besteht aus der Vorderwand 44, der Bodenwand 45 und den Seitenwänden 46, die im folgenden auch als "Ohrenwände" bezeichnet sind. Jede Ohrenwand 46 ist mit einem kreisförmigen Durchbruch 47 versehen. Im Unterschied zur handelsüblichen Kassettenbox ist bei der Box 42 die Vorderwand 44 mit der Bodenwand 45 verbunden, die Ohrenwände 46 können mit der Bodenwand 45 ganz oder teilweise verbunden sein (s. den Verbindungssteg 48), was aber nicht notwendig ist. Die Vorderwand 44 sollte mit den Ohrenwänden keine oder nur ebenfalls eine kurze, stegartige Verbindung aufweisen. Je länger die Verbindungsteile zwischen den Ohrenwänden 46 und den Vorder- und Bodenwänden 44 bzw. 45 sind, umso kürzer ist der zur Verfügung stehende Begrenzungsschlitz 50 und, wie noch weiter unten beschrieben, umso kleiner ist der erreichte Begrenzungswinkel.

Das Bodenteil 41 besteht aus Bodenwand 54, Rückwand 51, Seitenwänden 52 und 53 mit freien Endwänden 52a und 53a mit je einem Gelenkzapfen 49. Die Größe und Form des Ausschnitts 55 entspricht der Vorderwand 44 des Deckelteils 42, so daß sich ein geschlossener Quaderkörper ergibt.

Die Endwände 52a und 53a des Bodenteils 41 werden in die Schlitze 50 in der Deckelteil-Tasche 43 eingeführt, vorausgesetzt, der Abstand b ist etwas oder viel kleiner als a und die Dicke der Endwände 52a und 53a und die Länge der Zapfen 49 ist jeweils etwas kleiner als die Breite des Schlitzes 50. Die Zapfen 49 gelangen bei der Einführbewegung bei entsprechender Dimensionierung in die vorbestimmten Gelenkdurchbrüche oder Gelenkvertiefungen 47 des Deckelteils 42, so daß die Montage beendet ist. Notwendige Montagean- oder abschrägungen an Zapfen 49, zu Vertiefungen 47 hinführend, Ausbildung einer nach außen gerichteten Vorspannung der Endwände 52a und 53a können dabei benutzt werden.

Figuren 3 bis 5 zeigen schematische Darstellungen mit verschieden großen Schwenkwinkeln $\alpha$ bis $\delta$, wobei $\alpha = 180°$, $\beta = 9°$, $\gamma = 65°$ und $\delta = 20°$ betragen Wie den einzelnen Figuren entnehmbar ist, ist der jeweilige Begrenzungswinkel von der Länge bzw. Anordnung des jeweiligen Schlitzes, S 1 bis S 4 abhängig. In Figur 3 hat der Steg 48 etwa die Abmessungen der Figur 2. Es wäre möglich, durch die Verlängerung des Steges 48 und gleichzeitige entsprechende Verlegung des Gelenks die Festigkeit der Anordnung, die maßgeblich durch die Steg-Ohrenwand-Verbindung bestimmt ist, zu erhöhen. Selbstverständlich wäre der Schließrand 56 am Deckelteil 42 entsprechend zu erhöhen. Es kann andernfalls auch vorteilhaft sein, die Wandstärke des Taschenbodens 45 zu erhöhen.

In Figur 2 ist die geschlossene Box 40 dargestellt, und der aufgrund der Gelenk- und Schwenkwinkelbegrenzungs-Konstruktion notwendige Schließrand 56 des Deckels 42, der in Schließlage vorne durch den erhöhten Rand 57 der Wand 51 des Bodenteils 41 ergänzt wird, ist gut erkennbar. Bei entsprechender Anordnung des Gelenks ist es theoretisch auch denkbar, die Ränder zu vertauschen, das heißt, die Seitenränder am Bodenteil und den Vorderrand am Deckelteil vorzusehen, was aber Entformungsprobleme bei der Herstellung hervorruft. In Figuren 3 und 4 wird die Quaderform der Box 40 im Schließzustand wieder hergestellt (s. die gestrichelte Umrißlinie 58. In Figur 5 wurde auf die Herstellung der exakten Quaderform verzichtet (s. Umrißlinie 59). Die Ohrenwände überragen in diesem Beispiel die Gesamthöhe der zusammengeklappten Boden- und Deckelteile 41 und 42, um das Maß c). Für irgendwelche Anwendungen, z.B. als Schmuckkassette usw., wobei die Stapelbarkeit und Archivierbarkeit keine Rolle spielen, ist diese Version vorteilhaft einsetzbar.

In Figur 1 ist angedeutet, s. Bogenlinien der Aussparungen 60 an Seitenwänden 52a und 53a, daß sich im geschlossenen Zustand die Bogenränder der Ohrenwände 46, in die Aussparungen 60 legen, um die Quaderform auch seitlich zu vervollständigen. Die Tiefe der Aussparungen 60 ist geeignet herzustellen. Die Endwand 52a ist in Figur 1 gegenüber der Seitenwand 52 nach innen abgekröpft, sie kann jedoch bei Beachtung der Beziehung a > b gerade ausgebildet sein. Es ist selbstverständlich auch möglich, die Wandstärke von Seitenwänden 52 und 53 gegenüber ihren Endwänden 52a bzw. 53a dicker auszubilden. Falls es mehr auf ein Flach-Übereinanderstapeln, als ein senkrechtes Archivieren ankommt, kann auch durch eine größere Dickenausbildung der Ohrenwände 46 ein seitliches Überstehen in Kauf genommen und der Vorteil einer erhöhten Festigkeit der Ohrenwände 46 genutzt werden.

Es ist ohne weiteres möglich, zwischen den Boden- und Deckelteilen 41 und 42 übliche Rast-Verriegelungselemente wie Vorsprung und Vertiefung usw. zu verwenden, es ist auch möglich, über geeignet gewählte Vorspannungen der Wandteile eine ausreichende Reibung zwischen Boden- und Deckelteilen aufrechtzuerhalten.

Es wird noch auf einen anderen Aspekt der Erfindung aufmerksam gemacht, nämlich auf eine automatische Zwangsverriegelung der Boden- und Deckelteile 41 und 42 nach ihrem Zusammensetzen.

Im Falle der Box 40 ist die Zwaagsverriegelung folgendermaßen ausgebildet. Nach Einführen der Endwände 52a und 53a in die Schlitze 50 ist ein Trennen der Teile 41 und 42 praktisch nur durch Gewalt und damit Zerstörung der Behälterteile möglich. Die Zwangsverriegelung wird durch das beidseitige Umfassen jeder Endwand 52a, 53a einerseits durch die jeweilige Ohrenwand 46 und andererseits durch die Kanten der Vorder- und Bodenwände 44 und 45 der Tasche 43 gebildet. Beidseitig ist also eine im wesentlichen flächige Anlage für die Endwände 52a und 53a gegeben, wodurch eine Abstützung in Drehachsenrichtung und eine Zwangsführung in den Vertikalebenen erreicht wird. Die als Schließränder 56 bezeichneten, erhöhten Seitenkanten an der Deckelinnenfläche des Behälters 40 sind vorteilhafterweise vorgesehen, da sich für den einzubringenden Gegenstand eine Seitenführung als auch für den eingeführten Gegenstand eine Seitenabstützung gegen Herausfallen und -rutschen ergibt.

Stufenränder mit etwa jeweils halber Wandstärke und entsprechender, nicht dargestellter Stufenausbildung des Randes des Ausschnitts ergeben eine verbesserte Staubsicherheit, die besonders im Falle von nicht oder schlecht verpackten Aufzeichnungsträgern vorteilhaft ist. Derartige Stufenränder können auch an allen anderen Kanten des Behälters zur Erhöhung der Staubsicherheit und Verbesserung des Schließeingriffs beim Behälter 40 verwendet werden.

Derartige Behälter sind zur Aufnahme von Gegenständen bestimmt, die z.B. quaderförmig oder auch mit beliebigem Umriß flach sein können, wie z.B. Disketten, Schallplatten, Bandspulen, Filmspulen usw. Sie sind bei geschlossenem Behälter rundherum gegen die Umgebung abgeschirmt.

## Patentansprüche

1. Schwenkbehälter, im wesentlichen von Quaderform, für Gegenstände, insbesondere Aufzeichnungsträger, mit einem Bodenteil (41), der eine Rückwand, eine Bodenwand und in letzterer einen Ausschnitt (55) aufweist, der auf zwei Seiten durch Bodenteilseitenwände begrenzt ist, und mit einem Deckelteil (42), der aus einer Deckelwand und einer daran vorgesehenen Tasche (43) besteht, wobei die Vorderwand (44) der Tasche im Umriß der Kontur des Ausschnitts (55) entspricht und die Taschenseitenwände und der Taschenboden und die Taschenvorderwand mit der Deckelwand verbunden sind und zwischen Deckel- und Bodenteil Gelenkeinrichtungen (47 und 49) und Schwenkbegrenzungseinrichtungen vorgesehen sind, dadurch gekennzeichnet, daß die Schwenkbegrenzungseinrichtungen aus je einem von zwei parallelen Wänden begrenzten Schlitz (50) von begrenzter Länge in der Tasche (43) bestehen, wohinein dazu parallele Teile (52A, 53A) der Bodenteil-Seitenwände (52, 53) eingreifen und in einer Schwenkrichtung die Begrenzung bewirken.

2. Behälter nach Anspruch 1, dadurch gekennzeichnet, daß die Schlitze (50) in der Nähe der Taschenseitenwände (46) in der Taschenvorderwand (44) und gegebenenfalls -bodenwand (45) mit insbesondere geradem Verlauf, vorgesehen sind, in die die Teile (52a und 53a) der Bodenteil-Seitenwände (52 u. 53) eingreifen.

3. Behälter nach Anspruch 2, dadurch gekennzeichnet, daß die Teile (52A und 53A) der Bodenteil-Seitenwände (52 u. 53) Gelenkzapfen (49) und die Taschenseitenwände (46) entsprechende Ausnehmungen (47) aufweisen, wobei die Länge der Gelenkzapfen (49) zusammen mit der Dicke der Teile (52A u. 53A) kleiner dimensioniert ist als die Breite des Schlitzes (50).

4. Behälter nach einem der Ansprüche 1 bis 3, dadurch gekennzeichnet, daß der Deckelteil (42) in der Verlängerung der Taschenseitenwände (46) Schließränder (56) aufweist und der Bodenteil (41) eine gegenüber den Seitenwänden (52, 53) erhöhte Rückwand (51) aufweist, so daß der Behälter (40) in Schließstellung eine geschlossenen Quaderform (Figur 2A) besitzt.

5. Behälter nach einem der Ansprüche 1 bis 4, dadurch gekennzeichnet, daß die Seitenwände (52, 53) des Bodenteils (41) Ausnehmungen (60) zur Aufnahme der Taschenseitenwände (46) des Deckelteils (42) besitzen.

6. Behälter nach einem der Ansprüche 1 bis 5, dadurch gekennzeichnet, daß am Deckelteil (42) und am Bodenteil (41) Verriegelungselemente für die Schließstellung des Behälters (40) vorgesehen sind.

## Revendications

1. Récipient articulé, dans l'ensemble parallélépipédique, pour objets, en particulier pour supports d'enregistrement, comportant une partie fond (41) qui présente une paroi arrière, une paroi de fond et, dans cette dernière, une échancrure (55) qui est limitée sur deux côtés par des parois latérales de la partie fond, et une partie couvercle (42) qui est constituée d'une paroi de couvercle et d'une poche (43) prévue sur celle-ci, la paroi avant (44) de cette poche correspondant, quant à son contour, au contour de l'échancrure (55) et les parois latérales, le fond et la paroi avant de la poche étant unis à la paroi de couvercle et entre la partie couvercle et la partie fond étant prévus des moyens d'articulation (47 et 49) et des moyens de limitation de pivotement, caractérisé par le fait que les moyens de limitation de pivotement sont constitués chacun d'une fente (50) limitée par deux parois parallèles, de longueur limitée dans la poche (43) et dans laquelle des parties (52a, 53a) parallèles à elle des parois latérales (52, 53) de la partie fond s'engagent et produisent la limitation dans un sens de pivotement.

2. Récipient selon la revendication 1, caractérisé par le fait que les fentes (50), dans lesquelles s'engagent les parties (52a et 53a) des parois latérales (52 et 53) de la partie fond, sont prévues, en particulier rectilignes, à proximité des parois latérales (46) de la poche dans la paroi avant (44) et éventuellement dans la paroi de fond (45) de celle-ci.

3. Récipient selon la revendication 2, caractérisé par le fait que les parties (52a et 53a) des parois latérales (52 et 53) de la partie fond présentent des tourillons d'articulation (49) et les parois latérales (46) de la poche présentent des évidements correspondants (47), la somme de la longueur des tourillons d'articulation (49) et de l'épaisseur des parties (52a et 53a) étant inférieure à la largeur de la fente (50).

4. Récipient selon l'une des revendications 1 à 3, caractérisé par le fait que la partie couvercle (42) présente des bords de fermeture (56) dans le prolongement des parois latérales (46) de la poche et la partie fond (41) présente une paroi arrière (51) surélevée par rapport aux parois latérales (52, 53), de sorte que le récipient (40), fermé, forme un parallélépipède fermé (fig. 2).

5. Récipient selon l'une des revendications 1 à 4, caractérisé par le fait que les parois latérales (52, 53) de la partie fond (41) présentent des évidements (60) destinés à recevoir les parois latérales (46) de la poche de la partie couvercle (42).

6. Récipient selon l'une des revendications 1 à 5, caractérisé par le fait que sur la partie couvercle (42) et la partie fond (41) sont prévus des éléments de verrouillage de la fermeture du récipient (40).

**Claims**

1. An essentially rectangular pivotable container for articles, in particular recording media, which possesses a bottom part (41), consisting of a back wall and a base wall which has a cutout (55) bordered on two sides by side walls of the bottom part, and a lid part (42) consisting of a lid wall provided with a pocket (43), the outline of the front wall (44) of the pocket corresponding to the contour of the cutout (55) and the side walls, base and front wall of the pocket being connected to the lid wall, and joint devices (47 and 49) and rotation-restricting devices being provided between the lid part and the bottom part, wherein each rotation-restricting device comprises a slot (50), which is of limited length and is bordered by two parallel walls, in the pocket (43), parts (52a, 53a) parallel thereto of the side walls (52, 53) of the bottom part engaging these slots and imposing a restriction in one direction of rotation.

2. A container as claimed in claim 1, wherein the slots (50), into which the parts (52a and 53a) of the side walls (52 and 53) of the bottom part engage, are provided in a particularly straight form in the front wall (44) and, if appropriate, the base wall (45) of the pocket close to the side walls (46) of the pocket.

3. A container as claimed in claim 2, wherein the parts (52a and 53a) of the side walls (52 and 53) of the bottom part possess joint pegs (49) and the side walls (46) of the pocket possess appropriate recesses (47), the length of the joint pegs (49) together with the thickness of the parts (52a and 53a) being less than the width of the slot (50).

4. A container as claimed in any one of claims 1 to 3, wherein the lid part (42) possesses contact edges (56) as an extension of the side walls (46) of the pocket, and the bottom part (41) has a back wall (51) which is higher than the side walls (52, 53), so that the container (40) has a closed rectangular shape when in the closed position (Figure 2A).

5. A container as claimed in any one of claims 1 to 4, wherein the side walls (52, 53) of the bottom part (41) possess recesses (60) for receiving the side walls (46) of the pocket on the lid part (42).

6. A container as claimed in any one of claims 1 to 5, wherein locking elements are provided on the lid part (42) and on the bottom part (41), for the closed position of the container (40).

FIG.1

EP 0 142 088 B1

FIG.2

57  42

56  46

41  47(49)

FIG.3

41  58

$S_1$  α

56

48  42

FIG. 4

41  58

$S_2$  β

56

42

FIG. 5

41  $S_4$

C

$S_3$  γ

δ  59

42